# FASCICULE DE BREVET EUROPEEN

(11) **EP 0 385 861 B1**
(45) Date de publication et mention de la délivrance du brevet: **03.03.1993**
(21) Numéro de dépôt: 90400557.6
(22) Date de dépôt: 28.02.1990
(51) Int. Cl.: B64D 11/06, B60N 2/02

(54) **Siège de passagers convertible à tablette escamotable**
Umrüstbarer Fluggastsitz mit einer entfernbaren Abstellplatte
Adjustable passenger seat with a retractable table

(30) Priorité: 01.03.1989 FR 8902662
(43) Date de publication de la demande: 05.09.1990
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Maréchal, Robert, 75116 Paris (FR)
(74) Mandataire: Derambure, Christian

(56) Documents cités:
- EP-A- 0 227 239
- EP-A- 0 294 086
- EP-A- 0 335 018
- US-A- 4 307 913

## Description

L'invention concerne un siège de passagers de véhicule de transport en commun, notamment d'avion de ligne, du type définissant une pluralité de places dont au moins une est délimitée latéralement par deux accoudoirs écartés l'un de l'autre, et qui peut être utilisée soit en tant que place assise, soit pour le confort des passagers des autres places assises jouxtant cette place. Le besoin s'est fait sentir de pouvoir disposer d'un siège convertible selon les conditions d'utilisations souhaitées entre une version dite touriste où il procure le plus grand nombre de places et moins de confort, et une version dite première classe ou classe affaire où il procure le plus grand confort et moins de places assises.

La demande de brevet EP-A-0335018 mentionne déjà un tel siège convertible dans lequel une tablette centrale est articulée par des bras à la structure du siège et peut être soit placée sur les accoudoirs centraux rapprochés, soit escamotée dans le dossier ou dans l'assise de la place centrale. La demande de brevet EP-A-0227239 décrit par ailleurs un mécanisme d'articulation des accoudoirs à la structure. Néanmoins ce mécanisme n'autorise que deux positions, pour les accoudoirs, et ne procure pas un verrouillage suffisament fiable dans chaque position. De plus, les articulations autour d'axes horizontaux subissent des contraintes et une usure importantes affectant la longévité du mécanisme. Egalement, lors manoeuvres, la hauteur des accoudoirs est modifiée, ce que oblige à tenir la tablette surélevée et empêche l'utilisation de tablettes de largeurs diverses. Par ailleurs, la résistance et la rigidité du mécanisme sont insuffisantes en paratique.

L'invention a donc objet de pallier ces inconvénients, en proposant un tel siège de passagers de véhicule de transport en commun qui soit convertible aisément et rapidement entre une version touriste dans laquelle il propose un nombre maximum de places, et une version première classe ou classe affaire dans laquelle il propose une place en moins mais plus d'espace pour les autres places, et que incorpore un mécanisme de conversion léger, simple et peu onéreux tout en étant simultanément fiable, sûr et résistant. Plus précisément, l'invention vise à proposer un mécanisme permettant un verrouillage dans chaque position extrême ou dans des positions intermédiaires des accoudoirs, la largeur entre les accoudoirs pouvant être adaptée et modifiée selon notamment celle de la tablette.

L'invention a aussi pour objet de proposer un tel siège pourvu d'une tablette de confort dite cocktail, qui, en version première classe ou classe affaire, jouxte une place assise à hauteur des accoudoirs, et qui, en version touriste, est inutilisée et intégrée et escamotée sans être encombrante, ni apparente, ni gêner les passagers, ni diminuer le confort à écart longitudinal constant entre les sièges. En particulier, l'invention a pour objet de proposer un siège d'avion de ligne définissant trois places en version touriste et deux places et une tablette centrale en version première classe.

L'invention a aussi pour objet de proposer un tel siège dont la conversion peut être effectuée sans outil, quasiment instantanément, et sans nuire aux autres caractéristiques du siège, notamment aux caractéristiques mécaniques, de sécurité, ou de confort.

Egalement, l'invention a pour objet de proposer un tel siège qui :
. offre le même confort pour la place convertible que pour les autres en version touriste, et un véritable confort accru en version première classe, sur toute la largeur des places.
. offre un confort équivalent à celui des sièges non convertibles, notamment du point de vue de l'espace longitudinal.
. ait un esthétisme au moins équivalent, voire meilleur que les siège classiques non convertibles, en version touriste comme en version première classe, le caractère convertible du siège n'étant pas apparent.

Pour ce faire, l'invention concerne un siège de passagers de véhicule de transport en commun, notamment d'avion de ligne, du type définissant une pluralité de places assises dont au moins une est délimitée latéralement par deux accoudoirs, au moins un des deux accoudoirs étant associé à la structure du siège de façon à pouvoir être déplacé au moins entre une position où il est plus écarté de l'autre accoudoir et une position où il est plus rapproché de cet autre accoudoir, de sorte que la distance entre les deux accoudoirs peut être modifiée, une tablette formant plateau pouvant être placée dans une position d'utilisation en appui sur les deux accoudoirs lorsqu'ils sont rapprochés l'un de l'autre, caractérisé en ce que chaque accoudoir associé à la structure de façon à pouvoir être déplacé en translation, y est articulé par un mécanisme à bielles qui astreint l'accoudoir à conserver la même orientation longitudinale et la même hauteur lors de sa translation transversale au moins sensiblement horizontale entre deux positions.

Selon un mode de réalisation de l'invention, chacun des deux accoudoirs en question est associé à la structure du siège par un mécanisme à bielles de façon à pouvoir être déplacé en translation transversale au moins sensiblement horizontale, les deux mécanismes à bielles ayant une configuration symétrique l'un de l'autre par rapport au plan longitudinal médian P de la place assise délimitée entre les deux accoudoirs. Chaque mécanisme à bielles est constitué de deux bielles rigides et qui sont au moins sensiblement de mêmes longueur, forme, parallèles l'une à l'autre, et qui sont associées pivotantes à la structure du siège respectivement autour de deux axes de pivotement distincts au moins sensiblement verticaux, et à l'accoudoir autour de deux axes distincts au moins sensiblement verticaux, de façon à former un système déformable, notamment du type parallèlogramme déformable, imposant à l'accoudoir de conserver la même orientation générale. Les deux bielles sont coudées afin de ménager le maximum d'espace en largeur aux places assises, notamment aux places latérales lorsque les accoudoirs sont rapprochés l'un de l'autre. Les bielles sont associées à la structure au moins au voisinage de l'axe d'articulation du dossier à l'assise entre les deux dossiers séparés par l'acccoudoir, et par ailleurs sous la face inférieure de l'accoudoir correspondant. Les bielles s'étendent globalement inclinées vers le haut et vers l'avant à partir de leurs axes de pivotement et d'association à la structure. De la sorte, elles ne gênent pas les passagers et ne sont quasiment pas apparentes. Le mécanisme à bielles comporte un dispositif de blocage de l'accoudoir dans chacune des positions extrêmes ou intermédiaires plus rapproché ou plus écarté qu'il peut ou doit prendre. Ce dispositif de blocage est constitué par une extension de l'une des bielles au-delà de son axe de pivotement d'association à l'accoudoir, et par un têton porté par ladite extension et coopérant avec des lumières ménagées dans l'accoudoir pour le bloquer dans chaque position extrême ou intermédiaire.

En particulier, la tablette formant plateau est associée articulée par un mécanisme à la structure du siège entre les deux accoudoirs de façon à pouvoir être placée dans une position escamotée sous le coussin amovible de l'assise, et déplacée entre les positions escamotée et en appui sur les accoudoirs lorsque ceux-ci sont écartés l'un de l'autre.

Particulièrement, le mécanisme d'articulation de la tablette à la structure comporte au moins une bielle coudée associée à la structure par un axe de pivotement au moins sensiblement horizontal et confondu ou au voisinage de l'axe d'articulation du dossier à l'assise du siège, et sous la tablette par un axe de pivotement au moins sensiblement horizontal. Le mécanisme comporte également au moins un amortisseur fluide associé articulé à la bielle par un axe de pivotement au moins sensiblement horizontal situé au voisinage de l'axe de pivotement de la bielle par rapport à la structure. L'amortisseur est associé à la structure par un axe de pivotement inférieur au moins sensiblement horizontal. Le mécanisme à bielles comporte deux ensembles bielles et amortisseurs semblables et articulés aux mêmes axes ou à des axes alignés les uns aux autres. Le mécanisme à bielles et amortisseurs est disposé sensiblement en position médiane par rapport à la place assise délimitée par les deux accoudoirs , et par rapport à la tablette. La tablette est découpée pour prendre appui sur les parties antérieures des accoudoirs en laissant libres et utilisables les parties postérieures des accoudoirs garnies de coussins de confort. En combinaison avec ces caractéristiques le dossier de la place assise délimitée entre les deux accoudoirs est constitué de deux demi-dossiers qui peuvent être utilisés soit solidaires l'un de l'autre, soit solidaires respectivement du dossier qui les jouxte immédiatement.

Ainsi, l'invention fournit un siège convertible d'une version touriste à une version première classe ou classe affaire et réciproquement. En version touriste, les deux accoudoirs sont écartés au maximum l'un de l'autre, et la tablette est escamotée sous le coussin d'assise de la place centrale délimitée par les accoudoirs. En version première classe ou classe affaire, les deux accoudoirs sont au contraire rapprochés l'un de l'autre à la largeur de la table, ménageant ainsi une plus grande largeur pour les places assises latérales jouxtant immédiatement les accoudoirs de chaque côté de la place assise centrale, et la tablette est placée en appui au-dessus des deux accoudoirs rapprochés pour le confort des deux passagers situés de part et d'autre de la tablette. Le mécanisme de conversion est simple et rigide et permet l'utilisation de tablettes de différentes largeurs.

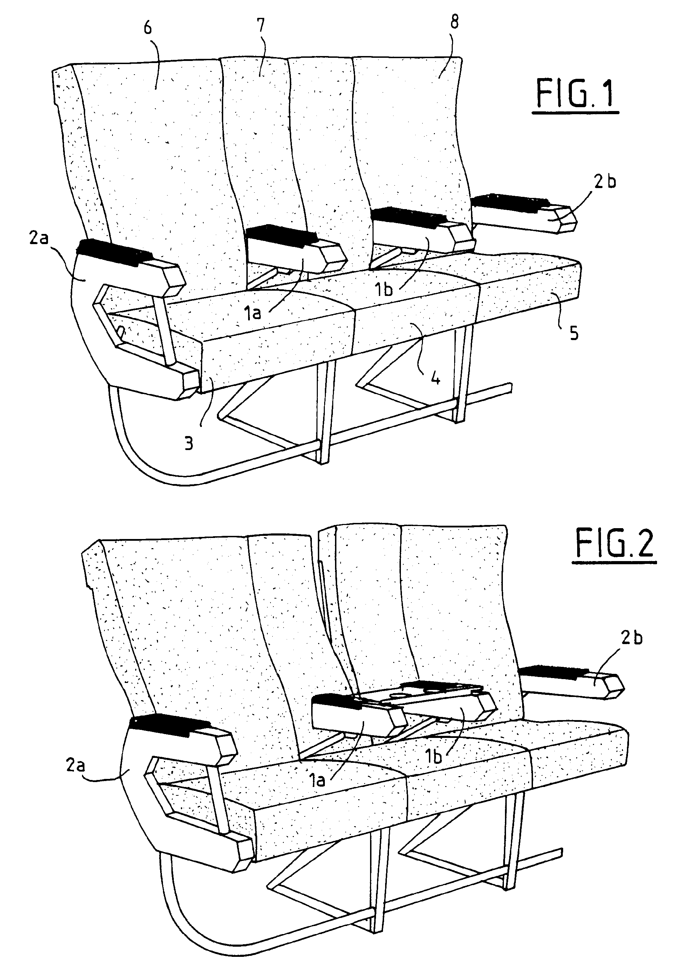

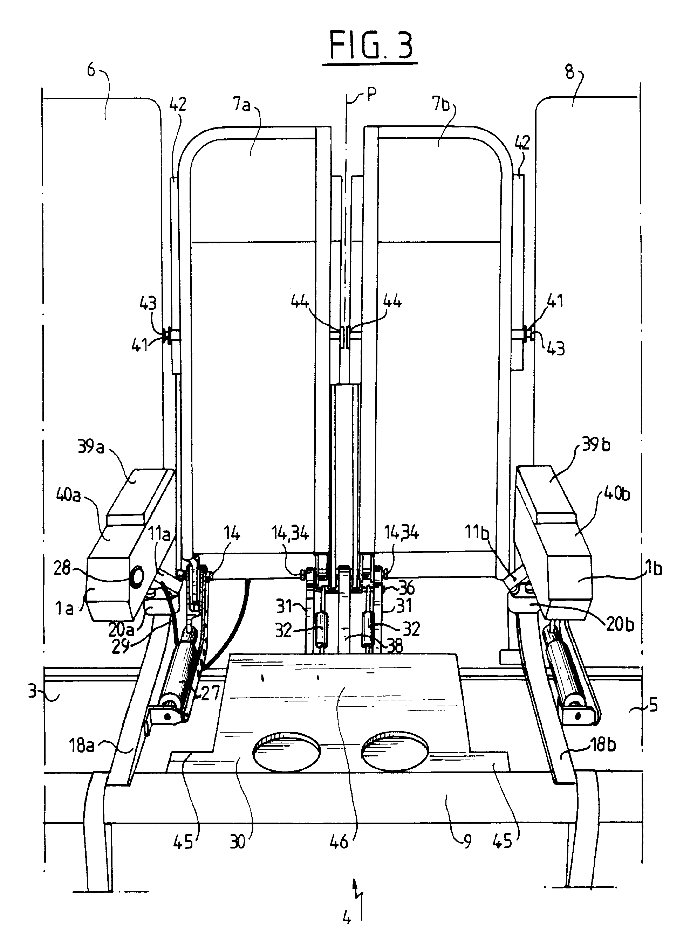

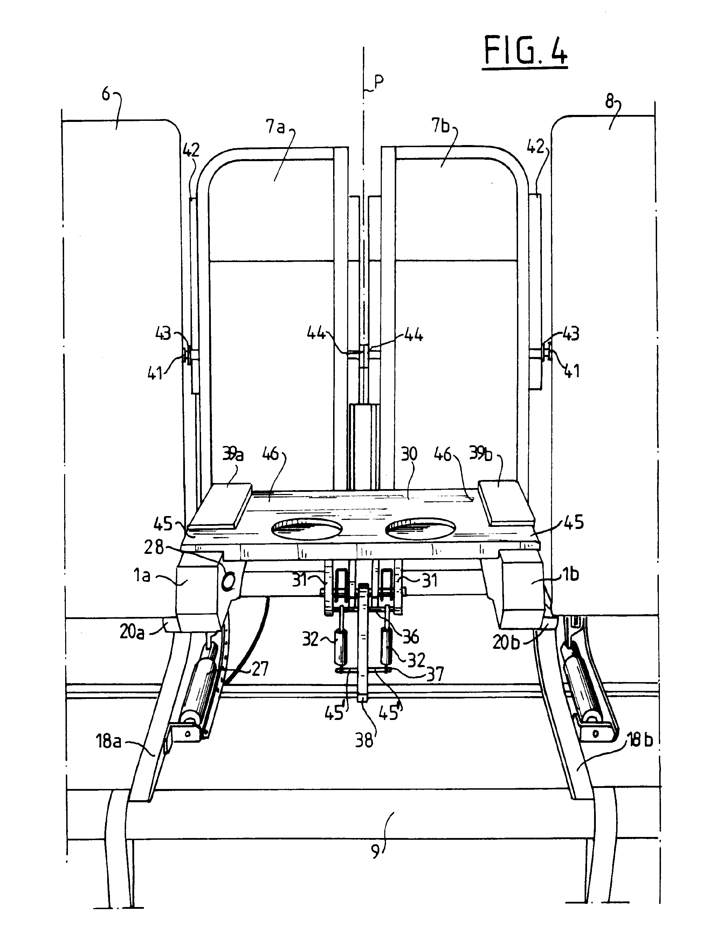

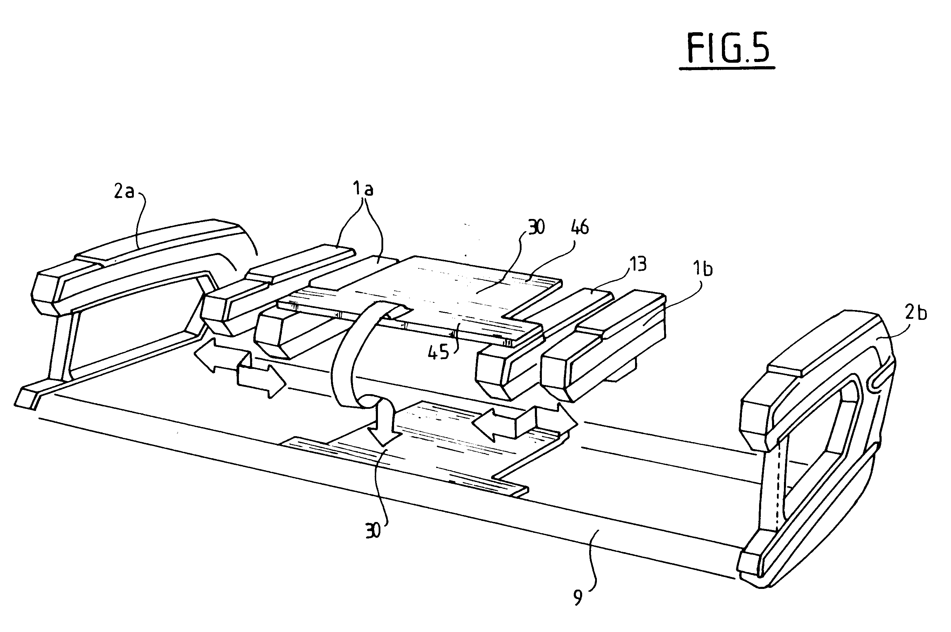

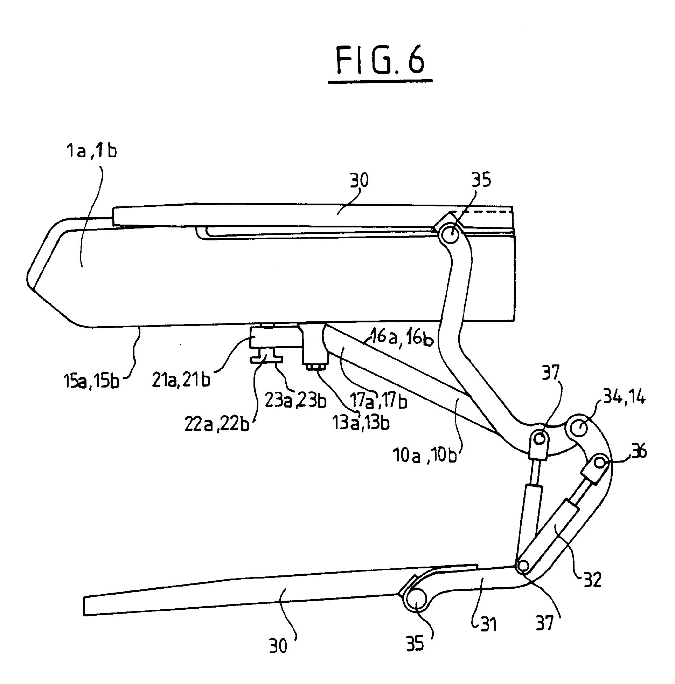

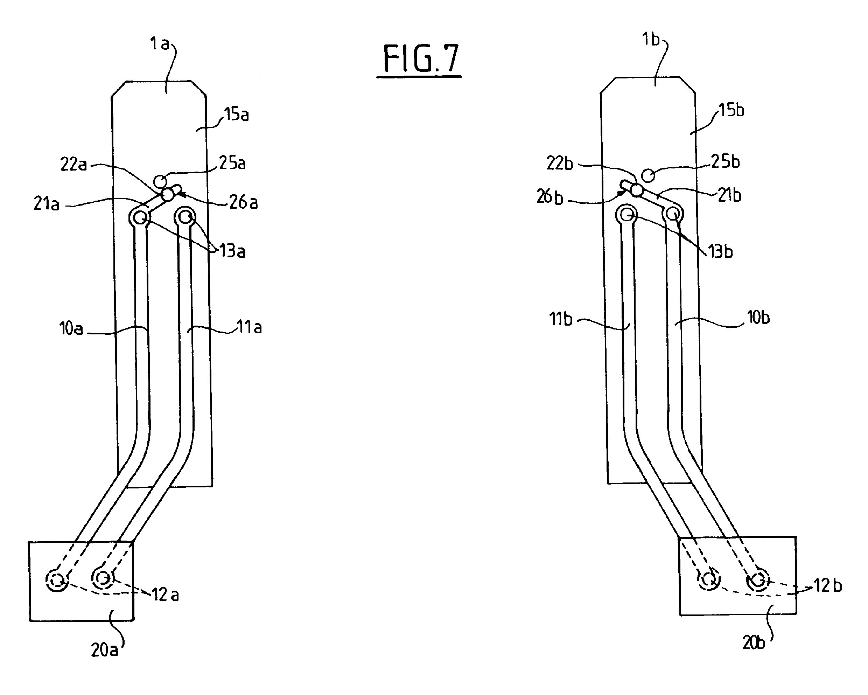

D'autres caractéristiques et avantages de l'invention apparaîtront à la lecture de la description suivante qui se référe aux figures annexées dans lesquelles :
. La figure 1 est une vue en perspective d'un siège trois places en version touriste selon l'invention.
. La figure 2 est une vue en perspective d'un siège trois places en version première classe ou classe affaire selon l'invention.
. La figure 3 est une vue de face illustrant la position des accoudoirs et de la tablette centrale d'un siège selon l'invention en version touriste, les coussins de confort ayant été ôtés.
. La figure 4 est une vue de face illustrant la position des accoudoirs et de la tablette centrale d'un siège selon l'invention en version première classe ou classe affaire, les coussins de confort ayant été ôtés.
. La figure 5 est une vue schématique en perspective illustrant les mouvements de la tablette et des accoudoirs d'un siège selon l'invention lors du passage de la version touriste à la version première classe et réciproquement.
. La figure 6 est une vue schématique partielle de profil illustrant le mécanisme à bielles et amortisseurs d'articulation de la tablette d'un siège selon l'invention.
. La figure 7 est une vue schématique partielle de dessous illustrant les mécanismes à bielles d'articulation des accoudoirs à la structure d'un siège selon l'invention, les accoudoirs étant représentés en position rapprochés l'un de l'autre.

L'invention concerne un siège de passagers de véhicule de transport en commun, notamment d'avion de ligne, du type définissant une pluralité de places assises dont au moins une est délimitée latéralement par deux accoudoirs 1a, 1b. Sur les figures, on a représenté à titre d'exemple non limitatif un siège de passager d'avion de ligne selon l'invention définissant normalement trois places assises en version touriste (figure 1), et deux places assises en version première classe (figure 2). Le siège selon l'invention est donc convertible entre la version représentée sur la figure 1 et celle représentée sur la figure 2 et vice-versa. L'invention permet néanmoins de réaliser de façon similaire des sièges définissant plus de places assises ou même un siège comportant deux places en version touriste et une seule place en version première classe.

Le siège selon l'invention représenté sur les figures comporte donc deux accoudoirs 2a, 2b extrêmes associés rigidement et fixes par rapport à la structure du siège de façon connue, et deux accoudoirs centraux 1a, 1b délimitant d'une part normalement en version touriste une place assise centrale entre ces deux accoudoirs centraux 1a, 1b, et d'autre part, de chaque côte, et avec chacun des accoudoirs 2a, 2b, respectivement deux places assises latérales disposées de part et d'autre de la place assise centrale. Le siège représenté forme donc une banquette constituée de trois assises 3, 4, 5 garnies de coussins d'assise amovibles, et de trois dossiers 6, 7, 8 garnis également de coussins de dossier amovibles, de façon connue en soi.

Le siège est par ailleurs constitué d'une structure 9 formant ossature de support des différents coussins et des différents éléments de fonctionnement de ce siège. La structure générale d'un tel siège est connue, et seuls les éléments propres à l'invention seront donc décrits en détail.

L'invention concerne donc un siège de passager de véhicule de transport en commun, notamment d'avion de ligne, du type définissant une pluralité de places assises dont au moins une est délimitée latéralement par deux accoudoirs 1a, 1b, caractérisé en ce qu'au moins un des deux accoudoirs 1a, 1b est associé à la structure 9 du siège de façon à pouvoir être déplacé en translation transversale au moins sensiblement horizontale au moins entre une position où il est plus écarté de l'autre accoudoir, et une position où il est plus rapproché de cet autre accoudoir, de sorte que la distance entre les deux accoudoirs 1a, 1b peut être modifiée, notamment selon que la place entre ces deux accoudoirs 1a, 1b est destinée à être occupée par un passager ou non. Le siège selon l'invention comporte une tablette 30 formant plateau associée articulée à la structure 9 du siège entre les deux accoudoirs 1a, 1b par un mécanisme 31, 32 à bielles et amortisseurs de façon à pouvoir être placée dans une position d'utilisation en appui sur les deux accoudoirs 1a, 1b rapprochés l'un de l'autre, ou dans une position escamotée sous le coussin amovible de l'assise 4, et déplacée entre ces deux positions lorsque les deux accoudoirs 1a, 1b sont écartés l'un de l'autre. Chacun des accoudoirs 1a, 1b qui est associé à la structure 9 de façon à pouvoir être déplacé en translation comme mentionné précédemment, y est articulé par un mécanisme à bielles 10a, 10b, 11a, 11b.

Contrairement à ce qui est préconisé par l'art antérieur, l'inventeur a mis en évidence que le fait de prévoir la tablette 30 cocktail escamotée dans l'assise 4 du siège offre des avantages prépondérants, peut être réalisé de façon simple du point de vue mécanique sans gréver le coût et le poids du siège, et est facile à utiliser.

Selon l'invention, chacun des accoudoirs 1a, 1b central de séparation de places assises, c'est-à-dire chacun des accoudoirs 1a, 1b autres que les accoudoirs fixes d'extrêmité 2a, 2b, est associé à la structure 9 du siège de façon à pouvoir être déplacé en translation transversale au moins sensiblement horizontale comme mentionné précédemment. Ainsi, dans le mode de réalisation représenté, chacun des deux accoudoirs 1a, 1b centraux délimitant la place centrale est articulé à la structure 9 par un mécanisme à bielles 10a, 10b, 11a, 11b qui lui est propre de façon à pouvoir être déplacé en translation transversale au moins sensiblement horizontale comme mentionné précédemment, les deux mécanismes à bielles 10a, 10b, 11a, 11b ayant des configurations symétriques l'une de l'autre par rapport au plan vertical longitudinal médian P de la place assise délimitée entre les deux accoudoirs 1a, 1b. Néanmoins, un seul des accoudoirs 1a, 1b délimitant la place assise peut être articulé de façon mobile par un tel mécanisme à bielles 10a, 10b, 11a, 11b à la structure 9 du siège, notamment dans le cas d'un siège formant normalement en version touriste uniquement deux places assises.

La description suivante du mécanisme à bielles 10a, 10b, 11a, 11b n'est donnée que pour un des deux accoudoirs 1a, 1b, les mêmes dispositions s'appliquant aussi à l'autre accoudoir 1b, 1a dans le cas d'un siège à au moins trois places assises tel que représenté.

Selon l'invention, le mécanisme à bielles 10a, 10b, 11a, 11b astreint l'accoudoir 1a, 1b correspondant à conserver la même orientation longitudinale (c'est-à-dire au moins sensiblement perpendiculaire au dossier 7), et au moins sensiblement la même hauteur, lors de sa translation. Chaque mécanisme à bielles 10a, 10b, 11a, 11b est constitué de deux bielles rigides 10a, 11a respectivement 10b, 11b qui sont au moins sensiblement de mêmes longueur, forme, et parallèles l'une à l'autre, et qui sont associées pivotantes à la structure 9 respectivement autour de deux axes de pivotement 12a, 12b distincts au moins sensiblement verticaux. Les deux bielles sont également associées pivotantes à l'accoudoir correspondant 1a respectivement 1b autour de deux axes de pivotement 13a, 13b distincts au moins sensiblement verticaux. Chacune des deux bielles 10a, 10b, 11a, 11b, est donc articulée à chacune de ses extrémités. Ainsi, pour chaque accoudoir 1a, 1b le mécanisme à bielles 10a, 10b, 11a, 11b forme un système déformable du type parallèlogramme déformable, imposant à l'accoudoir 1a, 1b correspondant de conserver la même orientation longitudinale et la même hauteur lors de la translation horizontale transversale. Les deux bielles 10a, 10b, 11a, 11b d'une mécanisme à bielles d'articulation d'un accoudoir 1a, 1b sont coudées (figure 7) à convexité orientée vers la place assise centrale délimitée par les accoudoirs 1a, 1b, et ce afin de ne pas gêner les passagers des places latérales situées de part et d'autre en version première classe. Les bielles 10a, 10b, 11a, 11b sont associées à la structure 9 du siège au moins au voisinage de l'axe géométrique d'articulation 14 du dossier 7 à l'assise 4 et entre les dossiers 6, 7 ou 7, 8 des places assises séparées par l'accoudoir 1a ou 1b. Les bielles 10a, 10b, 11a, 11b sont associées par ailleurs sous la face inférieure 15a, 15b de l'accoudoir correspondant 1a, 1b.

Chacun des axes de pivotement 12a, 12b, 13a, 13b d'une bielle 10a, 10b, 11a, 11b est formé d'un alésage vertical débouchant ménagé à chacune des extrémités libres 16a, 16b, 17a, 17b de la bielle, et d'un boulon 12a, 12b, 13a, 13b serré dans cet alésage et coopérant avec un taraudage vertical ménagé dans un support 20a, 20b de la structure 9 du siège ou dans l'accoudoir 1a, 1b. Des coussinets ou des paliers appropriés peuvent être interposés entre chaque boulon 12a,12b,13a,13b et les alésages correspondant. Des dispositifs de blocage de chaque boulon 12a,12b,13a,13b en position serrée peuvent aussi être prévus (contre-écrou, goupille, rondelle...).

Les bielles 10a, 10b, 11a, 11b s'étendent globalement inclinées par rapport à l'horizontale vers le haut et vers l'avant à partir de leurs axes de pivotement 12a, 12b d'association à la structure 9 au voisinage de l'axe géométrique d'articulation 14 du dossier 7 à l'assise 4. Les bielles 10a, 10b, 11a, 11b s'étendent inclinées entre chaque support 20a, 20b et la face inférieure 15a, 15b de l'accoudoir 1a, 1b correspondant. Chacun des supports 20a, 20b est formé à l'extrêmité arrière supérieure d'un longeron 18a, 18b séparant deux assises 3, 4 ou 4, 5. Les supports 20a, 20b sont situés ainsi au voisinage de l'axe 14 d'articulation des dossiers 6, 7, 8 aux assises 3, 4, 5.

Par ailleurs, l'écartement transversal entre chacun des deux bielles 10a, 10b, 11a, 11b d'un même mécanisme à bielles est déterminé de façon qu'il soit suffisant pour permettre le mouvement de l'accoudoir 1a, 1b entre les deux positions extrêmes plus rapproché et plus écarté, sans pour autant conférer au dit mécanisme à bielles un encombrement trop important. En pratique, la course de déplacement de chaque accoudoir 1a, 1b est relativement faible, par exemple comprise entre 5 et 15 cm, notamment de l'ordre de 10cm. De ce fait, un écartement relativement limité, notamment de l'ordre de quelques centimètres, entre chacune des deux bielles est suffisant. Ainsi, cet écartement entre les deux bielles peut être en pratique inférieur à la largeur de chacun des accoudoirs 1a, 1b dans chacune des positions de cet accoudoir.

Chaque mécanisme à bielles 10a, 10b, 11a, 11b propre à un accoudoir 1a, 1b comporte un dispositif de blocage 21a, 21b, 22a, 22b, 23a, 23b dudit accoudoir 1a, 1b dans chacune des positions -notamment extrêmes ou intermédiaires- plus rapproché ou plus écarté qu'il peut ou doit prendre. Ce dispositif de blocage 21a, 21b, 22a, 22b, 23a, 23b peut être commandé de l'extérieur par l'utilisateur pour d'une part bloquer l'accoudoir dans l'une et l'autre des positions extrêmes à volonté, et d'autre part, débloquer cet accoudoir à partir de chacune de ces positions en vue du passage d'une position à une autre lorsque l'on convertit le siège de la version touriste à la version première classe ou vice-versa. Un dispositif de blocage 21a, 21b, 22a, 22b, 23a, 23b selon l'invention est constitué par une extension 21a, 21b de l'extrémité libre 17a, 17b d'association à l'accoudoir 1a, 1b de l'une des bielles 10a, 10b au-delà de son axe de pivotement 13a, 13b d'association à l'accoudoir 1a, 1b (figure 7), et par un têton 22a, 22b porté par ladite extension 21a, 21b et coopérant avec des lumières 25a, 25b, 26a, 26b ménagées dans l'accoudoir 1a, 1b pour le bloquer dans chaque position extrême. L'extension 21a, 21b prolonge l'extrémité libre 17a, 17b horizontalement au-delà de l'axe de pivotement 13a, 13b sous la face inférieure 15a, 15b horizontale de l'accoudoir 1a, 1b. Chaque accoudoir 1a, 1b comporte au moins deux lumières 25a, 26a, respectivement 25b, 26b, dont l'une 25a, 25b permet le bloquage des accoudoirs 1a, 1b en position écartés l'un de l'autre, et dont l'autre 26a, 26b permet le blocage de ces accoudoirs 1a, 1b en position rapprochés l'un de l'autre. Les lumières 25a, 25b, 26a, 26b sont simplement ménagées à travers la face inférieure 15a, 15b de l'accoudoir 1a, 1b. Chacun des têtons 22a, 22b coopérant avec lesdites lumières est introduit dans un alésage vertical de l'extension 21a, 21b et saille verticalement vers le haut au-delà de cette extension 21a, 21b pour pénétrer dans les lumières 25a, 25b, 26a, 26b. Néanmoins, le têton 22a, 22b est associé à l'extension 21a, 21b de façon mobile pour pouvoir être dégagé verticalement et vers le bas de chaque lumière 25a, 25b, 26a, 26b à volonté. Pour ce faire, on peut prévoir par exemple que les extensions 21a, 21b soient creuses et renferment un ressort de compression coopérant avec une couronne en saillie radiale du têton 22a, 22b pour rappeler vers le haut ce têton 22a, 22b. Dans un tel cas, l'extension creuse 21a, 21b doit avoir au moins une paroi démontable pour permettre l'accès à et le montage d'un tel dispositif de rappel. Par ailleurs, le têton 22a, 22b saille également verticalement et vers le bas au-delà de l'extension 21a, 21b pour former un bouton 23a, 23b de préhension de ce têton 22a, 22b. Dans un tel mode de réalisation possible, les lumières 25a, 25b, 26a, 26b peuvent avoir une forme circulaire, ainsi que les extrémités supérieures des têtons 22a, 22b pénétrant dans ces lumières. Plusieurs lumières 25, 26 peuvent être prévues pour permettre le blocage des accoudoirs, dans des dispositions intermédiaires, selon la largeur de la tablette.

Le siège selon l'invention peut être muni de tous les organes nécessaires par ailleurs à son bon fonctionnement. Ces organes connus sont supposés intégrés au siège selon l'invention, seuls les organes spécifiques à l'invention étant décrits en détail, notamment, les dossiers 6, 7, 8 sont articulés aux assises 3, 4, 5 autour d'un axe géométrique commun 14 d'articulation horizontal transversal, et l'inclinaison du dossier peut être réglé grâce à un vérin 27 commandé par un bouton de commande 28 relié au vérin 27 grâce à un câble de connexion 29. Le bouton 28 est porté de façon classique par un des accoudoirs 1a, 1b, et le câble 29 de connexion peut être inséré dans l'une des deux bielles creuses 10a, 10b, 11a, 11b du mécanisme d'association de l'accoudoir à la structure. Dans ce cas, le câble 29 de connexion du bouton 28 au vérin 27 peut être introduit dans l'accoudoir 1a, 1b à travers la face inférieure 15a, 15b au niveau de l'extrémité libre 17a, 17b portant l'axe de pivotement 13a, 13b, à travers une lumière ménagée à cet effet. Ainsi, ce câble 29 de connexion est caché, comme dans le cas des accoudoirs traditionnels.

Le mécanisme 31, 32 à bielles et amortisseurs d'association de la tablette 30 à la structure 9 comporte au moins une bielle coudée 31 associée à la structure 9 par un axe de pivotement 34 au moins sensiblement horizontal et confondu ou au voisinage de l'axe géométrique d'articulation 14 du dossier 7 à l'assise 4 du siège. La bielle coudée 31 est associée sous la tablette 30 par un axe de pivotement 35 au moins sensiblement horizontal. Le mécanisme 31, 32 comporte par ailleurs au moins un amortisseur 32 fluide associé articulé à la bielle 31 par un axe de pivotement 36. Cet axe de pivotement 36 s'étend au moins sensiblement horizontalement et est situé au voisinage de l'axe de pivotement 34 de la bielle 31 par rapport à la structure 9. Par ailleurs, l'amortisseur 32 est associé articulé à la structure 9 par un axe de pivotement 37 inférieur qui s'étend également au moins sensiblement horizontalement. La forme et le fonctionnement de ce mécanisme 31, 32 à bielles et amortisseurs est représenté schématiquement sur la figure 6. La position inférieure de la tablette 30 sur la figure 6 correspond à la position que prend cette tablette lorsqu'elle est escamotée sous le coussin, c'est-à-dire comme représenté sur la figure 3. La position supérieure de la tablette 30 sur la figure 6 correspond au contraire à sa position d'utilisation en appui sur les accoudoirs 1a, 1b ou elle s'étend horizontalement vers l'avant du dossier 7, comme représenté par ailleurs sur les figures 2 et 4. Chaque bielle 31 est coudée pour s'adapter à la forme spéficique de la structure 9 du siège et du coussin d'assise 33, notamment deux fois coudée dans le même sens, comme représenté sur la figure 6.

Le mécanisme 31, 32 à bielles et amortisseurs représenté comporte deux ensembles bielle 31 et amortisseur 32 semblables et articulés aux mêmes axes ou selon des axes alignés ou confondus 34, 35, 36, 37. Néanmoins, le mécanisme 31, 32 à bielles et amortisseurs est disposé sensiblement en position médiane par rapport à la place assise délimitée par les deux accoudoirs 1a, 1b et par rapport à la tablette 30.

Comme représenté sur les figures 3 et 4, la structure 9 du siège comporte une potence 38 courbée médiane qui s'étend dans le plan P vertical médian longitudinal, et qui supporte à son extrémité libre supérieure un arbre 34 formant d'une part axe de pivotement pour chacune des bielles 31, et d'autre part axe 14 d'articulation du dossier 7, notamment de chaque demi-dossier 7a, 7b à l'assise 4. En effet, dans un siège selon l'invention, le dossier 7 entre les deux accoudoirs 1a, 1b intermédiaires et centraux, peut être constitué de demi-dossiers 7a, 7b qui peuvent être utilisés soit solidaires l'un de l'autre soit solidaires respectivement du dossier 6, 8 qui les jouxte immédiatement. Dans ce cas, l'arbre 34 porté par la potence 38 supporte de part et d'autre de cette potence 38 d'une part chaque demi-dossier 7a, 7b et d'autre part une bielle 31 d'articulation de la tablette 30. La potence 38 supporte également à un niveau inférieur, l'axe de pivotement 37 de chacun des amortisseurs 32 par rapport à la structure 9, grâce à des équerres ou tiges transversales 45′ solidaires de cette potence 38 qui est elle-même solidaire de la structure 9 du siège.

Les coussins d'assise des sièges d'avion sont en général aisément amovibles et associés à la structure 9 du siège par des agrafes, ou des pressions ou des bandes VELCRO (marque déposée) ou autres. De la sorte, pour passer de la version touriste à la version première classe, il suffit d'enlever ce coussin d'assise, de remonter la tablette 30 en position supérieure au dessus des accoudoirs 1a, 1b, de rapprocher les accoudoirs 1a, 1b après les avoir débloqués de la position où ils sont écartés l'un de l'autre, de laisser la tablette 30 reposer en appui sur chacun de ces accoudoirs 1a, 1b rapprochés, et de remettre le coussin d'assise. Pour passer de la version première classe à la version touriste, les mêmes opérations sont effectuées en sens inverse. Ces opérations sont illustrées sur la figure 5.

Généralement, un accoudoir comporte une partie postérieure 39a, 39b proche du dossier 7 garnie d'un coussin de confort et une partie antérieure 40a, 40b exempte d'un tel coussin de confort et qui peut supporter divers accessoires tels que cendrier ... Selon l'invention, la tablette 30 est découpée pour prendre appui sur les parties antérieures 40a, 40b des accoudoirs 1a, 1b en laissant libres et utilisables les parties postérieures 39a, 39b des accoudoirs garnies de coussin de confort. De la sorte, la tablette 30 ne gêne pas l'utilisation normale des accoudoirs 1a, 1b lorsqu'elle est en appui sur ces accoudoirs. De plus, cette tablette 30 peut être simplement constituée d'une plaque rigide mince de forme appropriée. Elle peut donc être logée facilement sous le coussin d'assise, du fait de son faible encombrement en épaisseur. La partie antérieure 45 de la tablette 30 destinée à reposer en appui sur les parties antérieures 40a, 40b des accoudoirs 1a, 1b est donc plus large que et en saillie latéralement par rapport à la partie postérieure 46 de la tablette 30 en regard des parties postérieures 39a, 39b des accoudoirs 1a, 1b.

Comme déjà dit, le dossier 7 de la place centrale peut être constitué de demi-dossiers 7a, 7b. Un dispositif de blocage 41, 42, 43, 44 est prévu pour solidariser chaque demi-dossier soit l'un à l'autre, soit respectivement au dossier qui le jouxte. Ce dispositif de blocage peut être constitué d'un axe 41 coulissant transversalement horizontalement à l'intérieur de chaque demi-dossier 7a, 7b et susceptible de pénétrer soit dans un orifice 44 de l'autre demi-dossier 7b, 7a, soit dans un orifice 43 du dossier 6, 8 formant la place assise située immédiatement à côté. Un levier 42 de commande peut être prévu le long du montant de chaque demi-dossier 7a, 7b, de façon à être accessible de l'extérieur, même lorsque les coussins de garniture du dossier sont en place. Le levier 42 coopère avec l'axe 41 par l'intermédiaire d'un dispositif du type filetage/taraudage pour commander le déplacement transversal de cet axe 41 dans un sens ou dans un autre lorsque l'on bascule ce levier 42 d'une position supérieure à une position inférieure. Par exemple, dans la position du levier 42 représentée sur les figures 3 et 4 où il est orienté vers le haut, chacun des axes 41 des deux demi-dossiers 7a, 7b est engagé dans les orifices 43 des autres dossiers 6, 8. Au contraire, lorsque l'on abaisse les leviers 42 vers le bas, les axes 41 sortent des orifices de ces dossiers 6, 8 et l'un des axes 41 de l'un des demi-dossiers 7a, 7b pénètre dans l'orifice 44 de l'autre demi-dossier 7a, 7b.

L'invention est avantageusement applicable dans le domaine du transport aérien pour proposer un siège multi-places convertible, léger, de faible côut, de grand confort, et parfaitement esthétique dans chacune des versions touriste ou première classe ou classe affaire dans laquelle il est utilisé. Le mode de réalisation préférentiel décrit ci-dessus d'un siège à trois places en version touriste n'est donné qu'à titre d'exemple non limitatif. Ainsi, l'invention est applicable pour réaliser un siège à deux places convertibles en une place, seul l'accoudoir central étant articulé pour être mobile horizontalement, ou encore pour réaliser un siège à plus de trois places.

## Revendications

1. Siège de passagers de véhicule de transport en commun, notamment d'avion de ligne, du type définissant une pluralité de places assises dont au moins une est délimitée latéralement par deux accoudoirs (1a, 1b), au moins un des deux accoudoirs (1a, 1b) étant associé à la structure (9) du siège de façon à pouvoir être déplacé au moins entre une position où il est plus écarté de l'autre accoudoir et une position où il est plus rapproché de cet autre accoudoir, de sorte que la distance entre les deux accoudoirs (1a, 1b) peut être modifiée, une tablette (30) formant plateau pouvant être placée dans une position d'utilisation en appui sur les deux accoudoirs (1a, 1b) lorsqu'ils sont rapprochés l'un de l'autre, caractérisé en ce que chaque accoudoir (1a, 1b) associé à la structure (9) de façon à pouvoir être déplacé en translation, y est articulé par un mécanisme à bielles (10a, 10b, 11a, 11b) qui astreint l'accoudoir (1a, 1b) à consever la même orientation longitudinale et la même hauteur lors de sa translation transversale au moins sensiblement horizontale entre deux positions.

2. Siège selon la revendication 1, caractérisé en ce que le mécanisme à bielles (10a, 10b, 11a, 11b) est constitué de deux bielles rigides (10a, 11a, respectivement 10a, 11b) qui sont au moins sensiblement de mêmes longueur, forme, et parallèles l'une à l'autre, et qui sont associées pivotantes à la structure (9) respectivement autour de deux axes de pivotement (12a, 12b) distincts au moins sensiblement verticaux, de façon à former un système déformable, notamment de type parallèlogramme déformable, imposant à l'accoudoir (1a, 1b) de conserver la même orientation.

3. Siège selon l'une des revendications 1 et 2, caractérisé en ce que chacun des deux accoudoirs (1a, 1b) est articulé à la structure (9) par un mécanisme à bielles (10a, 10b, 11a, 11b) de façon à pouvoir être déplacé en translation transversale au moins sensiblement horizontale, les deux mécanismes à bielles (10a, 10b, 11a, 11b) ayant des configurations symétriques l'une de l'autre par rapport au plan vertical longitudinal médian P de la place assise délimitée entre les deux accoudoirs (1a, 1b).

4. Siège selon l'une des revendications 2 à 3, caractérisé en ce que les deux bielles (10a, 10b, 11a, 11b) d'un mécanisme à bielles sont coudées afin de ménager le maximum d'espace en largeur aux places assises.

5. Siège selon l'une quelconque des revendications 2 et 4, caractérisé en ce que les bielles (10a, 10b, 11a, 11b) sont associées à la structure (9) au moins au voisinage de l'axe d'articulation (14) du dossier (7) à l'assise (4) entre les deux dossiers (6, 7 ou 7, 8) séparés par l'accoudoir (1a, 1b), et par ailleurs, sous la face inférieure (15a, 15b) de l'accoudoir (1a, 1b), et en ce que les bielles (10a, 10b, 11a, 11b) s'étendent globalement inclinées vers le haut et vers l'avant à partir de leurs axes de pivotement (12a, 12b) d'association à la structure (9).

6. Siège selon l'une quelconque des revendications 1 à 5, caractérisé en ce que le mécanisme à bielles (10a, 10b, 11a, 11b) comporte un dispositif de blocage (21a, 21b, 22a, 22b, 23a, 23b) de l'accoudoir (1a, 1b) dans chacune des positions extrêmes ou intermédiaires plus rapproché ou plus écarté qu'il peut ou doit prendre.

7. Siège selon la revendication 6, caractérisé en ce que le dispositif de blocage (21a, 21b, 22a, 22b, 23a, 23b) est constitué par une extension (21a, 21b) de l'une des bielles (10a, 10b) au-delà de son axe de pivotement (13a, 13b) d'association à l'accoudoir (1a, 1b), et par un têton (22a, 22b) porté par ladite extension (21a, 21b) et coopérant avec des lumières (25a, 25b, 26a, 26b) ménagées dans l'accoudoir (1a, 1b) pour le bloquer dans chaque position extrême.

8. Siège selon l'une quelconque des revendications 1 à 7, caractérisé en ce que la tablette (30) formant plateau est associée articulée par un mécanisme (31, 32) à la structure (9) du siège entre les deux accoudoirs dont l'un au moins est articulé de façon à pouvoir être placée dans une position escamotée sous le coussin amovible (33) de l'assise (4), et déplacée entre les positions escamotée et en appui sur les accoudoirs (1a, 1b) lorsque ceux-ci sont écartés l'un de l'autre.

9. Siège selon la revendication 8, caractérisé en ce que le mécanisme (31, 32) d'association de la tablette (30) à la structure (9) comporte au moins une bielle coudée (31) associée à la structure (9) par un axe de pivotement (34) au moins sensiblement horizontal et confondu ou au voisinage de l'axe d'articulation (14) du dossier (7) à l'assise (4) du siège, et sous la tablette (30) par un axe de pivotement (35) au moins sensiblement horizontal, et au moins un amortisseur (32) fluide associé articulé à la bielle (31) par un axe de pivotement (36) au moins sensiblement horizontal situé au voisinage de l'axe de pivotement (34) de la bielle (31) par rapport à la structure (9), et à la structure (9) par un axe de pivotement (37) inférieur mais sensiblement horizontal.

10. Siège selon l'une quelconque des revendications 8 à 9, caractérisé en ce que le mécanisme (31, 32) à bielles et amortisseurs comporte deux ensembles bielle (31) et amortisseur (32) semblables et articulés aux mêmes axes ou à des axes alignés (34, 35, 36, 37).

11. Siège selon l'une quelconque des revendications 1 à 10, caractérisé en ce que le mécanisme (31, 32) à bielles et amortisseurs est disposé sensiblement en position médiane par rapport à la place assise délimitée par les deux accoudoirs (1a, 1b) et par rapport à la tablette (30).

12. Siège selon l'une quelconque des revendications 1 à 11, caractérisé en ce que la tablette (30) est découpée pour prendre appui sur les parties antérieures (40a, 40b) des accoudoirs (1a, 1b) en laissant libres et utilisables les parties postérieures (39a, 39b) des accoudoirs garnies de coussins de confort.

13. Siège selon l'une quelconque des revendications 1 à 12, caractérisé en combinaison et ce que le dossier (7) entre les deux accoudoirs (1a, 1b) est constitué de deux demi-dossiers (7a, 7b) qui peuvent être utilisés soit solidaires l'un de l'autre, soit solidaires respectivement du dossier (6, 8) qui les jouxtent immédiatement.

## Patentansprüche

1. Sitz für Personen in öffentlichen Verkehrsmitteln, insbesondere in Linienflugzeugen des Typs, der eine Mehrzahl Sitzplätze bildet, von denen mindestens einer seitlich durch zwei Armlehnen (1a, 1b) begrenzt ist, wobei mindestens eine der beiden Armiehnen (1a, 1b) derart mit dem Rahmen (9) des Sitzes verbunden ist, daß sie aus einer Position, in der sie in größerem Abstand von der anderen Armlehne befindet, in eine Position, in der sie näher bei der anderen Armlehne befindet, verstellt werden kann, sodaß der Abstand zwischen den beiden Armlehnen (1a, 1b) verändert werden kann und ein eine Abstellfläche bildendes Tablett (30) zu dessen Benutzung auf die beiden Armlehnen (1a, 1b) aufgelegt werden kann, wenn diese sich näher beieinander befinden, dadurch gekennzeichnet, daß jede Armlehne (1a, 1b), die derart mit dem Rahmen (9) des Sitzes verbunden ist, daß sie sich in Querrichtung verschieben läßt, so über ein Gestänge (10a, 10b, 11a, 11b) damit verbunden ist, daß die eine Armlehne (1a, 1b) zwangsläufig dieselbe Längsrichtung und beim weitgehend waagrechten Querverschieben dieselbe Höhe besitzt wie die andere.

2. Sitz nach Patentanspruch 1, dadurch gekennzeichnet, daß das Gestänge (10a, 10b, 11a, 11b) aus je zwei starren Stangen (10a, 10b bzw. 11a, 11b) besteht, deren Länge und Form weitgehend übereinstimmen und die weitgehend parallel zueinander verlaufen sowie schwenkbar mit dem Rahmen (9) bzw. um zwei unterschiedliche, weitgehend senkrechte Schwenkachsen (12a, 12b) verbunden, sind, sodaß sie eine verstellbare Vorrichtung, insbesondere ein verstellbares Parallelogram bilden, wodurch beide Armlehnen (1a, 1b) zwangsläufig dieselbe Position einnehmen.

3. Sitz nach einem beliebigen der Patentansprüche 1 und 2, dadurch gekennzeichnet, daß jede der beiden Armlehnen (1a, 1b) derart über ein Gestänge (10a, 10b, 11a, 11b) schwenkbar mit dem Rahmen (9) verbunden ist, daß sie weitgehend waagrecht in Querrichtung verscheben werden kann, wobei die beiden Gestänge (10a, 10b, 11a, 11b) in Bezug auf eine senkrechte Mittellinie P des zwischen den beiden Armlehnen (1a, 1b) befindlichen Sitzplatzes symmetrisch zueinander angeordnet sind.

4. Sitz nach einem beliebigen der Patentansprüche 2 und 3, dadurch gekennzeichnet, daß die Gestänge (10a, 10b, 11a, 11b) mindestens in der Nähe der Schwenkachse (14) zwischen Rückenlehne (7) und Sitzfläche (4) zwischen je zwei durch die Armlehne (1a, 1b) und die Unterseite (15a, 15b) der Armlehne (1a, 1b) voneinander getrennten Sitzen (6, 7 bzw. 8, 9) mit dem Rahmen (9) verbunden sind, sowie dadurch, daß die Gestänge (10a, 10b, 11a, 11b) von deren Schwenkachse (12a, 12b) am Rahmen (9) aus insgesamt schräg nach vorne oben ausgerichtet sind.

5. Sitz nach einem beliebigen der Patentansprüche 2 und 4, dadurch gekennzeichnet, daß die Gestänge (10a, 10b, 11a, 11b) dem Rahmen (9) zumindest in der Nähe der Schwenkachse (14) der Rückenlehne (7) der Stizfläche (4) zwischen den beiden durch die Armlehne (1a, 1b) voneinander getrennten Rückenlehnen (6, 7 bzw. 7,8) sowie unter der Unterseite (15a, 15b) der Armlehne (1a, 1b) zugeordnet sind und daß die Gestänge (10a, 10b, 11a, 11b) von ihren Schwenkachsen (12a, 12b) am Rahmen (9) aus insgesamt schräg nach oben und nach vorn verlaufen.

6. Sitz nach einem beliebigen der Patentansprüche 1 bis 5, dadurch gekennzeichnet, daß das Gestänge (10a, 10b, 11a, 11b) eine Blockierung (21a, 21, 22a, 22b, 23a, 23b) für die Armlehne (1a, 1b) in jeder der End- oder Zwischenpositionen in größorem oder geringerem Abstand besitzt, die es einnehmen kann oder soll.

7. Sitz nach Patentanspruch 6, dadurch gekennzeichnet, daß die Blockierung (21a, 21, 22a, 22b, 23a, 23b) aus einer Verlängerung (21a, 21b) einer der Stangen (10a, 10b) über deren Schwenkachse (13a, 13b) in Verbindung mit der Armlehne (1a, 1b) sowie aus einem von dieser Verlängerung (21a, 21b) gehaltenen Ansatz (22a, 22b) besteht, der in Öffnungen (25a, 25b, 26a, 26b) in der Armlehne paßt, um sie in jeder Endposition zu blockieren.

8. Sitz nach einem beliebigen der Patentansprüche 1 bis 7, dadurch gekennzeichnet, daß das eine Abstellfläche bildende Tablett (30) über einen Mechanismus (31, 32) zwischen den beiden Armlehnen schwenkbar mit dem Rahmen (9) des Sitzes verbunden ist, wobei mindestens eine der Armlehnen so schwenkbar ist, daß es in eingeklappter Stellung unter das abnehmbare Kissen (33) der Stizfläche (4) und zwischen der eingeklappten Stellung und der Stellung beim Aufliegen auf den Armlehnen (1a, 1b) verlagert werden kann, wenn letztere sich im größeren Abstand zueinander befinden.

9. Sitz nach Patentanspruch 8, dadurch gekennzeichnet, daß der Mechanismus (31, 32) zur Verbindung von Tablett (30) und Rahmen (9) mindestens eine abgewinkelte Stange (31) besitzt, die übe eine weitgehend waagrechte, mit der Schwenkachse (14) zwischen der Rückenlehne (7) und der Stizfläche (4) zusammenfallende oder sich in deren Nähe befindliche Schwenkachse (34) sowie unter dem Tablett (30) über eine weitgehend waagrechte Schwenkachse (35) und mindestens einem über eine weitgehend waagrechte Schwenkachse (36) in der Nähe der Schwenkachse (34) der Stange (31) gegenüber dem Rahmen (9) schwenkbar mit der Stange (31) verbundenen hydraulischen Stoßdämpfer (32) und über eine untere, aber weitgehend waagrechte Schwenkachse (37) mit dem Rahmen (9) verbunden ist.

10. Sitz nach einem beliebigen der Patentansprüche 8 und 9, dadurch gekennzeichnet, daß der Mechanismus (31, 32) mit Stangen und Stoßdämpfern aus zwei Baugruppen Stangen (31) zwei Baugruppen Stoßdämpfern (32) besteht, die sich gleichen und die um dieselben bzw. um aufeinander ausgerichtete Achsen (34, 35, 36, 37) schwenken.

11. Sitz nach einem beliebigen der Patentansprüche 1 bis 10, dadurch gekennzeichnet, daß der Mechanismus (31, 32) mit Stangen und Stoßdämpfern sich weitgehend in Mittelstellung des Sitzes zwischen den beiden Armlehnen (1a, 1b) und des Tabletts (30) befindet.

12. Sitz nach einem beliebigen der Patentansprüche 1 bis 11, dadurch gekennzeichnet, daß das Tablett (30) so ausgeschnitten ist, daß es auf den beiden vorderen Teilen (40a, 40b) der Armlehnen (1a, 1b) aufliegt und somit die hinteren Teile (39a, 39b) freiläßt, welche gepolstert sind.

13. Sitz nach einem beliebigen der Patentansprüche 1 bis 12, dadurch gekennzeichnet, daß die Rückenlehne (7) zwischen den beiden Armlehnen (1a, 1b) sich aus zwei Hälften (7a, 7b) zusammensetzt, die entweder fest miteinander oder fest mit der entsprechenden, direkt daran anschließenden Rückenlehne (6, 8) verbunden sein können.

## Claims

1. Public transport vehicle passenger seat, more particularly of a commercial air plane, of the type defining a plurality of sitting places with at least one place being laterally delimited by two armrests (1a, 1b), at least one of the two armrests (1a, 1b) being associated with the structure (9) of the seat so as to be able to be moved at least between one position where it is moved further away from this other armrest so that the distance between the two armrests (1a, 1b) can be modified, a shelf (30) forming a plate able to be placed in a use position in support on the two armrests (1a, 1b) when they are brought close to each other, wherein each armrest (1a, 1b) associated with the structure (9) so as to be able to be translation-moved is joined to it by a coupler mechanism (10a, 10b, 11a, 11b) which forces the armrest (1a, 1b) to retain the same longitudinal orientation and height during its transversal translation, at least approximately horizontal, between two positions.

2. Seat according to claim 1, wherein the coupler mechanism (10a, 10b, 11a, 11b) is constituted by two rigid connecting rods (10a, 11a, respectively 10b, 11b) which are at least about the same length with the same shape and parallel to each other and are pivoting associated with the structure (9) respectively around two distinct approximately vertical swivel pins (12a, 12b) so as to form a deformable system, especially of the deformable parallelogram type, forcing the armrest (1a, 1b) to keep the same orientation.

3. Seat according to claim 1 or 2, wherein each of the two armrests (1a, 1b) is joined to the structure (9) by a coupler mechanism (10a, 10b, 11a, 11b) so as to be able to be transversal-translation moved at least approximately horizontally, the two coupler mechanisms (10a, 10b, 11a, 11b) each having symmetrical configurations with respect to the median longitudinal vertical plane P of the sitting place delimited between the two armrests (1a, 1b).

4. Armrest according to claim 2 or 3, wherein the two connecting rods (10a, 10b, 11a, 11b) of a coupler mechanism are curved so as to provide the sitting places with a maximum amount of space widthwise.

5. Seat according to claim 2 or 4, wherein the connecting rods (10a, 10b, 11a, 11b) are associated with the structure (9) at least close to the hinge pin (14) of the back rest (7) to the seating position (4) between the two back rests (6, 7 or 7, 8) separated by the armrest (1a, 1b) and in addition under the lower face (15a, 15b) of the armrest (1a, 1b) and wherein the connecting rods (10a, 10b, 11a, 11b) extend totally slanted upwards and forewards from their swivel pins (12a, 12b) associated with the structure (9).

6. Seat according to any one claims 1 to 5, wherein the coupling mechanism (10a, 10b, 11a, 11b) comprises a device (21a, 21b, 22a, 22b, 23a, 23b) for locking the armrest (1a, 1b) in each of the closest or most distant extreme or intermediate positions it is able or has to assume.

7. Seat according to claim 6, wherein the locking device (21a, 21b, 22a, 22b, 23a, 23b) is constituted by an extension (21a, 21b) of one of the connecting rods (10a, 10b) beyond its swivel pin (13a, 13b) associated with the armrest (1a, 1b), and a dog point (22a, 22b) borne by said extension (21a, 21b) and cooperating with openings (25a, 25b, 26a, 26b) provided in the armrest (1a, 1b) so as to lock it in each extreme position.

8. Seat according to any one claims 1 to 7, wherein the shelf (30) forming a plate is associated joined by a mechanism (31, 32) with the structure (9) of the seat between the two armrests, at least one armrest being joined in such a way as to be able to be placed in a retracted position under the movable cushion (33) of the seating position (4) and moved between the retracted positions and in support on the armrests (1a, 1b) when the latter are spaced from each other.

9. Seat according to claim 8, wherein the mechanism (31, 32) associating the shelf (30) with the structure (9) comprises at least one curved connecting rod (31) associated with the structure (9) via at least one approximately horizontal swivel pin (34) and merged with or close to the hinge pin (14) of the back rest (7) of the seating position (4) and under the shelf (30) by at least one approximately horizontal swivel pin (35), and at least one associated hydraulic shock absorber Joined to the connecting rod (31) by at least one approximately horizontal swivel pin (36) situated close to the swivel pin (34) of the connecting rod (31) with respect to the structure (9) and to the structure (9) by a lower but approximately horizontal swivel pin (37).

10. Seat according to claim 8 or 9, wherein the coupling and absorbers mechanism (31, 32) comprises two similar connecting rod (31) and absorber (32) units joined to the same swivel pins or to aligned swivel pins (34, 35, 36, 37).

11. Seat according to any one of claims 1 to 10, wherein the coupling and absorbers mechanism (31, 32) is disposed approximately in a median position with respect to the sitting place delimited by the two armrests (1a, 1b) and with respect to the shelf (30).

12. Seat according to any one claims 1 to 11, wherein the shelf (30) is cut so as to take support on the front portions (40a, 40b) of the armrests (1a, 1b), thus leaving free and useable the rear portions (39a, 39b) of the armrests trimmed with comfortable cushions.

13. Seat according to any one of claims 1 to 12, wherein in combination the back rest (7) between the two armrests (1a, 1b) is formed of two half-back rests (7a, 7b) which may be used as integral with each other or respectively integral with the back rest (6, 8) immediately close to them.
